# EUROPÄISCHE PATENTANMELDUNG

(11) **EP 4 585 558 A1**
(43) Veröffentlichungstag der Anmeldung: **16.07.2025**
(21) Anmeldenummer: 24020018.8
(22) Anmeldetag: 12.01.2024
(51) Int. Cl.: C01B 3/04, C01B 3/34, B01J 8/06

(54) **VERFAHREN UND ANLAGE ZUR HERSTELLUNG EINES VERFAHRENSPRODUKTS**

(71) Anmelder: Linde GmbH, 82049 Pullach (DE)
(72) Erfinder: Behrens, Axel, 82049 Pullach (DE); Krebs, Benjamin, 82049 Pullach (DE); Lang, Christian, 82049 Pullach (DE); Ettner, Florian, 82049 Pullach (DE); Laznicka, Stefan, 82049 Pullach (DE); Müller-Thorwart, Ole, 82049 Pullach (DE); Zander, Hans-Jörg, 82049 Pullach (DE)
(74) Vertreter: Fischer, Werner

(57) **Zusammenfassung**

Es wird ein Verfahren zur Herstellung eines Verfahrensprodukts vorgeschlagen, das umfasst, einen Reaktionseinsatz (1) einem Reaktor (100) zuzuführen und in dem Reaktor (100) unter Erhalt von Wasserstoff mit einem Katalysator in Kontakt zu bringen, wobei der Katalysator unter Verwendung von elektrischer Energie beheizt wird und in mehreren keramischen Katalysatormodulen (110, 120, 130) bereitgestellt ist, durch die jeweils Widerstandsheizelemente (113, 123, 133) geführt sind, wobei die Katalysatormodule (110, 120, 130) für eine serielle Durchströmung mit dem Reaktionseinsatz (1) eingerichtet sind. Eine Anlage zur Durchführung des Verfahrens wird ebenfalls vorgeschlagen.

## Beschreibung

Die Erfindung betrifft ein Verfahren und eine Anlage zur Herstellung eines Verfahrensprodukts, insbesondere von Wasserstoff.

### Hintergrund

Die Erzeugung von Wasserstoff im großtechnischen Maßstab erfolgt derzeit noch überwiegend auf Basis von Kohlenwasserstoffen. Hierbei ist eine Reihe von Verfahren bekannt und in gängigen Nachschlagewerken, beispielsweise im Artikel "Hydrogen" in Ullmann's Encyclopedia of Industrial Chemistry, 15. Juni 2000, DOt: 10.1002/14356007.a13_297, Abschnitt 4, "Production", beschrieben.

Die Erzeugung von Wasserstoff kann durch Umsetzung von gasförmigen, festen oder flüssigen Kohlenwasserstoffen wie Erdgas, Naphtha oder Kohle erfolgen. Hierbei kann insbesondere eine katalytische Reformierung in bestimmten Ausgestaltungen wie Dampfreformierung (engl. Steam Methane Reforming, SMR) oder autotherme Reformierung (engl. Autothermal Reforming, ATR) zum Einsatz kommen. Ein weiterer Weg zur Herstellung von Wasserstoff aus entsprechenden Kohlenwasserstoffen umfasst die partielle Oxidation (engl. Partial Oxidation, POX). Auch Kombinationen entsprechender Verfahren können eingesetzt werden. Derartige Verfahren weisen einen beträchtlichen Kohlendioxid-Fußabdruck auf, weshalb der durch solche Verfahren bereitgestellte Wasserstoff auch als "grauer" Wasserstoff bezeichnet wird.

Um regenerativ erzeugten elektrischen Strom nutzen und Kohlendioxidemissionen bei der Herstellung von Wasserstoff weitgehend reduzieren zu können, wird zunehmend auch die Wasserelektrolyse zur Herstellung von Wasserstoff eingesetzt. Entsprechende Verfahren können in unterschiedlichen Ausgestaltungen durchgeführt werden. Man spricht in diesem Fall auch von "grünem" Wasserstoff. Zumindest bis zur wirtschaftlich erfolgreichen Realisierung von Verfahren zur Herstellung von grünem Wasserstoff können geeignete Brückentechnologien eingesetzt werden. Diese Brückentechnologien umfassen insbesondere die Rückgewinnung und Lagerung oder Verwendung von Kohlendioxid (engl. Carbon (Dioxide) Capture and Storage, CCS bzw. Carbon (Dioxide) Capture and Utilization, CCU). Entsprechend hergestellter Wasserstoff wird auch als "blauer" Wasserstoff bezeichnet.

Ausgestaltungen von Verfahren zur Herstellung von grauem und blauem Wasserstoff sind in der EP 4 249 429 A1 der Anmelderin beschrieben. Es wird insbesondere auf die Figuren 1 bis 3 und die zugehörige Figurenbeschreibung Bezug genommen.

Wenngleich jüngere Entwicklungen hinsichtlich der Herstellung von blauem Wasserstoff bereits bedeutende Verbesserungen zeigen, besteht der Bedarf nach Verfahren, die Verbesserungen hinsichtlich Effizienz, Flexibilität und/oder Emissionen bieten. Die vorliegend bereitzustellenden Lösungen sollen dabei nicht auf den Einsatz bei der Herstellung von Wasserstoff beschränkt sein, sondern sich auch für die Herstellung anderer Verfahrensprodukte eignen, bei der endotherme katalytische Reaktionen zum Einsatz kommen, wie sie weiter unten noch erläutert werden.

Auch andere Wege zur Herstellung von Wasserstoff können grundsätzlich beschritten werden, beispielsweise die sogenannte Ammoniakreformierung, auch als Ammoniakspaltung bezeichnet. Ammoniak kann dabei als "Speicherform" für Wasserstoff dienen, da Ammoniak sich besser und sicherer lagern und transportieren lässt als gasförmiger Wasserstoff. Auch solche und andere Verfahren sollen von Ausgestaltungen der vorliegenden Erfindung umfasst sein.

### Übersicht

Vor diesem Hintergrund werden ein Verfahren und eine Anlage zur Herstellung eines Verfahrensprodukts, insbesondere von Wasserstoff, mit den Merkmalen der unabhängigen Patentansprüche vorgeschlagen. Ausgestaltungen sind Gegenstand der abhängigen Patentansprüche und der nachfolgenden Beschreibung.

Das vorgeschlagene Verfahren zur Herstellung eines Verfahrensprodukts umfasst, einen Reaktionseinsatz einem Reaktor zuzuführen und in dem Reaktor unter Erhalt von (elementarem oder molekularem) Wasserstoff mit einem Katalysator in Kontakt zu bringen, wobei der Katalysator unter Verwendung von elektrischer Energie beheizt wird und in mehreren keramischen Katalysatormodulen mit jeweils einer Vielzahl von insbesondere parallelen Kanälen bereitgestellt ist, wobei durch die Katalysatormodule jeweils Widerstandsheizelemente geführt sind, und wobei die Katalysatormodule für eine serielle Durchströmung mit dem Reaktionseinsatz eingerichtet sind.

Der Reaktionseinsatz kann einen oder mehrere Kohlenwasserstoffe aufweisen, wie eingangs erwähnt. Es kann sich aber auch um eine oder mehrere andere Verbindungen handeln, die selbst eine Wasserstoffquelle darstellen, wie beispielsweise Ammoniak, oder beispielsweise auch um oxidierbare Stoffe, die mit Wasser, das ebenfalls Teil des Reaktionseinsatzes sein kann, Wasserstoff bilden. Ausgestaltungen der Erfindung betreffen insbesondere eine Reformierung eines oder mehrerer Kohlenwasserstoffe, so dass demgemäß der Reaktionseinsatz einen oder mehrere Kohlenwasserstoffe aufweisen und unter Verwendung eines entsprechenden, an sich bekannten Katalysators umgesetzt werden kann.

Ein "Katalysatormodul" ist gemäß der hier verwendeten Definition ein keramischer Körper mit einer Vielzahl insbesondere parallel verlaufender Kanäle mit einem Kanaldurchmesser von beispielsweise 0,1 bis 1,0 cm. Ein Katalysatormodul kann auch aus einer Vielzahl von insbesondere rohrförmigen keramischen Teilelementen zusammengesetzt sein, die insbesondere parallel angeordnet und optional miteinander verbunden sein können, so dass entsprechende Kanäle bereitgestellt werden. Die Anzahl der Kanäle oder entsprechender Teilelemente kann insbesondere 100 bis 30.000 betragen. Das gesamte Katalysatormodul kann einen Durchmesser oder eine Kantenlänge von beispielsweise bei 0,1 bis 4,0 m aufweisen. Die Kanäle können dabei mit einem geeigneten Katalysatormaterial ausgekleidet oder das Katalysatormaterial kann in ein keramisches Grundmaterial eingebettet sein. Als Katalysatormaterial kann dabei insbesondere ein Mischoxid der Elemente Nickel, Cobalt oder bestimmter Edelmetalle verwendet werden.

Mit dem vorgeschlagenen Verfahren und seinen Ausgestaltungen werden ein kompaktes und zuverlässiges Design für eine elektrisch beheizte endotherme katalytische Reaktion, insbesondere eine Reformierung, vorgeschlagen. Das vorgeschlagene Verfahren und seine Ausgestaltungen sind insbesondere weitgehend unempfindlich gegenüber Fehlverteilungen. Ein einfacher Austausch von Einheiten ist möglich, was zu reduzierten Wartungszeiten und -kosten führt. Ferner kann in entsprechenden Ausgestaltungen eine Standard-Gerätegröße für automatisierte und standardisierte Fertigung definiert werden. In einer modularen Anordnung kann eine Anzahl von Untereinheiten einfach verringert/erhöht werden, um die Menge des Verfahrensprodukts zu bestimmen. Durch den Wegfall von Brennern ist eine kompakte Bauweise möglich, und es können dennoch sehr hohe Wärmeströme erzielt werden. Ein in dem Verfahren und seinen Ausgestaltungen verwendeter Reaktor kann flexibel belastet werden, was ein schnelles Hoch- und Herunterfahren des Prozesses ermöglicht. Im Gegensatz zu herkömmlichen Verfahren ist eine genaue Regelung der Heiztemperatur möglich, und da kein Rauchgas gebildet wird, fallen die entsprechenden Kohlendioxidemissionen im Rauchgas weg.

In einer Ausgestaltung des vorgeschlagenen Verfahrens ist vorgesehen, dass der Reaktionseinsatz einen oder mehrere Kohlenwasserstoffe und/oder Ammoniak als ein oder mehrere Edukte aufweist und der Katalysator eine Bildung von (elementarem oder molekularem) Wasserstoff aus dem einen oder den mehreren Edukten katalysiert. Die Erfindung stellt damit eine besonders vorteilhafte Lösung für entsprechende Verfahren bereit, die unten noch ausführlicher erläutert sind.

In einer Ausgestaltung des vorgeschlagenen Verfahrens ist vorgesehen, dass die Bildung des Wasserstoffs eine Reformierreaktion umfasst und dem Reaktor ein Gasgemisch bei einer Temperatur von 900 bis 1100 °C entnommen wird. Durch die vorliegend vorgeschlagenen Maßnahmen wird eine besonders vorteilhafte Lösung für entsprechende Hochtemperaturreaktionen bereitgestellt.

In einer Ausgestaltung des vorgeschlagenen Verfahrens ist vorgesehen, dass die Katalysatormodule austauschbar in dem Reaktor bereitgestellt sind. Auf diese Weise wird ein entsprechendes Verfahren bzw. eine entsprechende Anlage besonders wartungsfreundlich.

In einer Ausgestaltung des vorgeschlagenen Verfahrens ist vorgesehen, dass die Widerstandsheizelemente und/oder die Katalysatormodule einzeln ansteuerbar oder regelbar sind. Auf diese Weise kann in besonders vorteilhafter Weise auf individuelle Performancemerkmale der einzelnen Katalysatormodule, die sich beispielsweise aus Fertigungstoleranzen oder unterschiedlichen Alterungserscheinungen ergeben können, reagiert werden.

In einer Ausgestaltung des vorgeschlagenen Verfahrens ist vorgesehen, dass die Katalysatormodule in einem inneren Reaktorbehälter aufgenommen sind, der innerhalb eines äußeren Reaktorbehälters angeordnet ist. Zwischen innerem Reaktorbehälter und äußerem Reaktorbehälter kann ein Zwischenraum vorgesehen sein, was aber keine zwingende Voraussetzung darstellt.

In einer Ausgestaltung des vorgeschlagenen Verfahrens ist vorgesehen, dass ein erstes Ende des inneren Reaktorbehälters gegenüber dem äußeren Reaktorbehälter geöffnet und ein zweites Ende des inneren Reaktorbehälters gegenüber dem äußeren Reaktorbehälter abgeschlossen ist. Wie auch nachfolgend erläutert, ermöglicht eine entsprechende Ausgestaltung eine gezielte Stromführung des Reaktionseinsatzes und beispielsweise auch eine Kühlung der Wand und der elektrischen Anschlüsse des inneren Reaktorbehälters mit dem Einsatzgemisch.

In einer Ausgestaltung des vorgeschlagenen Verfahrens ist der Reaktor dafür eingerichtet, den Reaktionseinsatz in einer ersten Hauptströmungsrichtung durch den Zwischenraum und danach in einer nicht der ersten Hauptströmungsrichtung entsprechenden, insbesondere entgegengesetzten, zweiten Hauptströmungsrichtung durch den inneren Reaktorbehälter und durch die Katalysatormodule zu führen. Der Begriff der "Hauptströmungsrichtung" soll dabei den Mittelwert der Strömungsrichtungen aller Moleküle des Reaktionseinsatzes bezeichnen, deren Strömungsrichtungen einzeln auch von der Hauptströmungsrichtung abweichen können, beispielsweise aufgrund von absichtlichen oder unvermeidlichen Turbulenzen. Durch eine entsprechende Stromführung des Einsatzgemisches lassen sich die angesprochenen Vorteile erzielen.

In einer Ausgestaltung des vorgeschlagenen Verfahrens ist vorgesehen, dass die Widerstandsheizelemente jeweils an elektrische Leitungen angebunden sind und über diese mit elektrischer Spannung versorgt werden, wobei eine individuelle Ansteuerung oder Regelung möglich ist.

In einer Ausgestaltung des vorgeschlagenen Verfahrens ist vorgesehen, dass die Anschluss-Leitungen teilweise oder vollständig durch den Zwischenraum geführt sind. Auf diese Weise ist durch den im Zwischenraum geführten Reaktionseinsatz eine aktive Kühlung der Stromanschlüsse möglich und daher eine kleinere Querschnittsfläche derselben als im ungekühlten Zustand möglich. Gegebenenfalls können auch höhere Stromstärken verwendet werden.

In einer Ausgestaltung des vorgeschlagenen Verfahrens ist vorgesehen, dass die Anschlüsse bzw. Durchführungen in einer Anzahl von 2 × n bereitgestellt sind, was unterschiedliche elektrische Beschaltungen der Heizelemente ermöglicht (Dreieck, "open-delta" und Stern) und an eine Anzahl von n Außenleitern angebunden sind. Entsprechende Ausgestaltungen können daher mit üblichen dreiphasigen Anschlüssen mit beispielsweise drei bis fünf Leitern in an sich bekannter Weise versorgt werden.

In einer Ausgestaltung des vorgeschlagenen Verfahrens ist vorgesehen, dass die Widerstandsheizelemente jeweils mit einem ersten Anschluss mit einem ersten der Außenleiter und mit einem zweiten Anschluss mit einem zweiten, unterschiedlichen der Außenleiter verbunden sind. Hierdurch kann insbesondere eine vorteilhafte Stromversorgung und ein Gleichhalten der Leitungslägen erreicht werden.

In einer Ausgestaltung des vorgeschlagenen Verfahrens ist n drei und die Widerstandsheizelemente sind in einer offenen Deltaverbindung verbunden. Neben der Gleichhaltung der Leitungslängen, die bereits erwähnt wurde, kann auf diese Weise eine besonders gute Kontrollierbarkeit der Bestromung erzielt werden.

In einer Ausgestaltung des vorgeschlagenen Verfahrens ist vorgesehen, dass in den Reaktor Gas- und/oder Flüssigkeitseinspeiseleitungen geführt sind, die in dem äußeren und/oder äußeren Reaktorbehälter und/oder zwischen zumindest zwei der Katalysatormodule münden. Hierdurch ist eine gezielte Kühlung an den jeweiligen Mündungsstellen möglich.

In einer Ausgestaltung des vorgeschlagenen Verfahrens ist vorgesehen, dass Gasverteilelemente in dem Reaktor angeordnet sind. Diese ermöglichen insbesondere eine Gleichverteilung und Vermeidung von lokalen Überhitzungen.

In Ausgestaltung kann das vorgeschlagene Verfahren für eine Umsetzung des Reaktionseinsatzes eingerichtet sein, die aus einer Reformierung, einer Propandehydrierung, einer Butandehydrierung, einer Butendehydrierung, einer Ethylbenzoldehydrierung, einer reversen Wassergasshift und einer Ammoniakspaltung ausgewählt ist. Die vorliegende Erfindung und ihre Ausgestaltungen eignen sich damit für eine Vielzahl unterschiedlicher Verfahren.

Die vorgeschlagene Anlage zur Herstellung eines Verfahrensprodukts, weist einen Reaktor und einen Katalysator sowie Mittel auf, die dazu eingerichtet sind, dem Reaktor einen Reaktionseinsatz zuzuführen und in dem Reaktor mit dem Katalysator unter Erhalt von Wasserstoff in Kontakt zu bringen, wobei Mittel bereitgestellt sind, den Katalysator unter Verwendung von elektrischer Energie zu beheizen und wobei der Katalysator in mehreren keramischen Katalysatormodulen bereitgestellt ist, durch die jeweils Widerstandsheizelemente geführt sind, wobei die Katalysatormodule für eine serielle Durchströmung mit dem Reaktionseinsatz eingerichtet sind.

Zu weiteren Merkmalen und Vorteilen einer entsprechenden Anlage und Ausgestaltungen hiervon sei auf die obigen Erläuterungen betreffend das vorgeschlagene Verfahren und seine Ausgestaltungen ausdrücklich verwiesen, da diese hierfür in gleicher Weise gelten.

Entsprechendes gilt auch für eine Anlage, die dazu eingerichtet sein kann, ein Verfahren gemäß einer beliebigen Ausgestaltung durchzuführen.

### Zeichnungen

Ausführungsformen der Erfindung werden nachfolgend rein beispielhaft unter Bezugnahme auf die beigefügte Zeichnung beschrieben, wobei
- Figur 1: einen Reaktor zeigt;
- Figur 2: eine Ausgestaltung der elektrischen Anschlüsse des Reaktors zeigt; und
- Figur 3: eine weitere Ausführungsform des Reaktors zeigt.

### Ausführungsformen

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale der Erfindung nicht abschließend und/oder beschränkend betrachtet werden. Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen der Erfindung können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß Ausführungsformen der vorliegenden Erfindung beziehen, können auch für Verfahren, Prozesse, Methoden usw. gemäß den Ausführungsformen der vorliegenden Erfindung gelten und umgekehrt. Gleiche, gleich wirkende, in ihrer Funktion einander entsprechende, baulich identisch oder vergleichbar aufgebaute Elemente, Verfahrensschritte usw. können mit identischen Bezugszeichen angegeben sein.

Die vorliegende Erfindung und Ausgestaltungen hiervon werden nachfolgend unter Bezugnahme auf eine elektrisch beheizte endotherme katalytische Reaktion, insbesondere eine Reformierung, rläutert. Wie mehrfach angesprochen, ist die Erfindung jedoch nicht hierauf beschränkt. Die nachfolgenden Erläuterungen und Definitionen, die einige Grundlagen der Erfindung betreffen, können für alle oder einen Teil der hier vorgestellten Ausgestaltungen gelten, und die Erläuterung bestimmter Aspekte im Zusammenhang mit nur einem Teil oder einer der Ausgestaltungen soll nicht dahingehend verstanden werden, dass diese Aspekte nicht auch mit anderen oder allen Ausgestaltungen, soweit technisch möglich und sinnvoll, verwirklicht sein können.

Sämtliche hier verwendeten Prozentangaben können sich auf Mol-, Mengen- oder Volumenanteile beziehen. Druckangaben in bar sind, soweit nicht anders erläutert, insbesondere als Absolutdrücke zu verstehen.

Die Konjunktion "und/oder" soll, wenn in einer Aufzählung vor dem letzten Begriff der Aufzählung verwendet, so verstanden werden, dass alle in der Aufzählung zuvor genannten Begriffe in beliebiger Weise miteinander kombiniert werden können. Mit anderen Worten ist mit "A, B und/oder C" "A und/oder B und/oder C" oder "wenigstens eines der Elemente A, B und C in beliebiger Kombination" gemeint.

Ist vorliegend von einem "Teil" eines Stoffstroms die Rede, kann es sich hierbei um einen Mengenanteil mit gleicher Zusammensetzung handeln, der von einem Ausgangsstrom lediglich abgezweigt wurde, aber auch um einen Anteil abweichender Zusammensetzung und ggf. nur eine Komponente des Ausgangsstroms, der mittels eines Verfahrens wie Kondensation, Evaporation, Sieden, Destillieren, Rektifizieren, Absorbieren, Adsorbieren, Flashen, Membrantrennen, Abscheiden oder dergleichen gebildet wird oder bei einem entsprechenden Schritt als Rest verbleibt. Ein "Teil" kann auch nach einer Kombination beliebiger der vorstehend benannten Schritte vorliegen, beispielsweise nach trenntechnischer Bearbeitung abgezweigten Anteils.

Der Begriff "Prozessgas" soll hier ein Gasgemisch bezeichnen, das in einem Wasserstofferzeugungsverfahren unter Einsatz eines Katalysators aus einem Kohlenwasserstoff oder Ammoniak gebildet wird, und das typischerweise innerhalb der Reaktionsrohre und/ oder Reaktionskanäle eines derartigen Reaktors geführt wird. Alternativ hierzu wird nachfolgend auch der Begriff "Synthesegas" verwendet. Nachfolgend ist vereinfachend, und ohne die vorliegende Erfindung hierdurch in irgendeiner Weise beschränken zu wollen, von einer "Reformierung", einem "Reformer" und dergleichen die Rede, wodurch alle geeigneten Wasserstofferzeugungsverfahren, die unter Verwendung beheizter Reaktoren arbeiten, einbezogen sein sollen. Entsprechendes gilt auch, wenn nachfolgend von "Methan" die Rede ist. Eine Reformierung kann auch andere Kohlenwasserstoffe, Kohlenwasserstoffgemische oder Ammoniak umsetzen.

Eine sehr wettbewerbsfähige Lösung zur Verringerung von Kohlendioxidemissionen ist die Abscheidung von Kohlendioxid aus dem Prozessgas einer Reformierung. Allerdings kommt bei einem befeuerten Reformer Kohlendioxid nicht nur als Nebenprodukt im Prozessgas, sondern auch im Rauchgas vor, was die Abscheidung von Kohlendioxid komplex und kostenintensiv macht. Um vor diesem Hintergrund eine weitere Verringerung der Kohlendioxidemissionen zu erzielen, kann auch der Brennstoff (weitgehend) dekarbonisiert werden, um auch die Rauchgasemissionen bei der Reformierung zu vermeiden.

Ein Ansatz hierzu besteht in der Verbrennung von Wasserstoff oder von alternativen, kohlenstofffreien Brennstoffen wie Ammoniak. Allerdings ist die Herstellung dieser Brennstoffe bisweilen zu kostspielig oder energieintensiv. Eine Alternative, die derzeit entwickelt wird, ist der Ersatz der Beheizung der Dampfreformierung mit Brennstoff durch eine elektrische Beheizung, wobei die erforderliche elektrische Energie vorzugsweise unter Verwendung erneuerbarer Energiequellen hergestellt wird. Im Falle der Dampfreformierung spricht man dann auch von E-SMR (electrified Steam Methane Reforming).

Eine Aufreinigung des in der Dampfreformierung gebildeten Prozessgases, oder genauer des Wasserstoffs darin, umfasst typischerweise die Verwendung eines Trennverfahrens wie einer Druckwechseladsorption (PSA). Hierbei wird neben mehr oder weniger reinem Wasserstoff ein sogenanntes Tail-, Rest- oder Abgas gebildet, das Komponenten wie Kohlenmonoxid, nicht umgesetzte Kohlenwasserstoffe und Wasserstoff enthalten kann. Bei einer elektrischen Beheizung der Reformierung ergibt sich dabei als weiterer Vorteil der, dass der Wasserstoff, der in einem derartigen Abgas enthalten ist, nicht mehr für Heizzwecke benötigt wird, so dass grundsätzlich mehr Wasserstoff aus dem verwendeten Einsatz hergestellt werden kann. Dieser kann beispielsweise durch eine zweite PSA-Stufe aufgereinigt oder in den Prozess zurückgeführt werden oder in anderen Anlagen verwendet werden.

Konzepte für einen E-SMR sind in der Literatur beschrieben. Diese umfasst zunächst eine direkte Widerstandsheizung in verschiedenen Formen. Hierbei kann beispielsweise eine direkte elektrische Widerstandsbeheizung der Reformerrohre mit einem Washcoat-Katalysator, eine direkte Widerstandsbeheizung des Katalysators selbst, eine direkte Widerstandsbeheizung von Heizelementen wie Heizstäben oder Heizdrähten, eine direkte Widerstandsbeheizung von Heizelementen als eine Art Zwischenüberhitzung, gefolgt von einem Katalysatorbett, oder eine direkte Widerstandsbeheizung des Katalysatorträgers erfolgen. Neben der direkten Widerstandsheizung ist auch eine indirekte Heizung durch Strahlung möglich. In diesem Fall können Heizplatten oder -elemente ähnlich wie bei einem seitenbefeuerten Reformer verwendet werden. Darüber hinaus kann auch eine Induktionserwärmung des Katalysators oder der Spulen vorgesehen sein.

Kritisch bei der elektrischen Beheizung ist die Anordnung der Heizelemente und des Katalysators im Reformer. In der EP 3 895 795 A1 wird eine Kombination aus einem strukturierten keramischen Katalysatorkörper, der einen hohlen Strömungsweg bildet, und einem elektrischen Heizelement (vorzugsweise einem Widerstandsheizdraht) innerhalb des hohlen Strömungswegs vorgeschlagen. Diese Konstruktion ermöglicht eine kompakte, kostengünstige und zuverlässige E-SMR-Konstruktion. Dennoch hat die Konstruktion Nachteile für großtechnische Reaktorkonzepte, die es zu lösen gilt.

So führt die begrenzte Länge der strukturierten Keramik zu einer begrenzten Strömungslänge und einer sehr hohen Anzahl paralleler Kanäle, was ein hohes Risiko der Fehlverteilung mit sich bringt. E-SMR-Prozesse zur Erzeugung von blauem Wasserstoff erfordern ferner typischerweise hohe Reformer-Austrittstemperaturen von ca. 1000 °C, um eine hohe Umsetzung des Einsatzgases zu erreichen und die schwer zu adressierenden Emissionen von Kohlendioxid oder die Notwendigkeit kostspieliger Prozessrezyklen zu begrenzen. Eine schlechte Strömungsverteilung in Verbindung mit einem hohen Umsatz birgt aber ein hohes Risiko lokaler Überhitzung und möglicher Schäden am Katalysator oder Heizdraht. Elektrische Verbindungen innerhalb der Hochtemperaturzonen des Reaktors sind technisch schwierig zu realisieren und kostspielig. Elektrische Verbindungen (außerhalb der Reaktionszone) müssen mit einer großen Querschnittsfläche ausgelegt werden, um die Wärmeentwicklung zu begrenzen, oder es muss eine angemessene Kühlung vorgesehen werden. Die Anzahl und der Platzbedarf der elektrischen Verbindungen innerhalb des Reaktors sind hoch. Es existieren keine Konzepte für den Austausch defekter Kanäle oder Heizdrähte, und schließlich bestehen Herausforderungen bei der Abdichtung (Druck, Temperatur, Explosionsschutz) für die elektrische Durchführung der Leitungen durch die Reaktorwand.

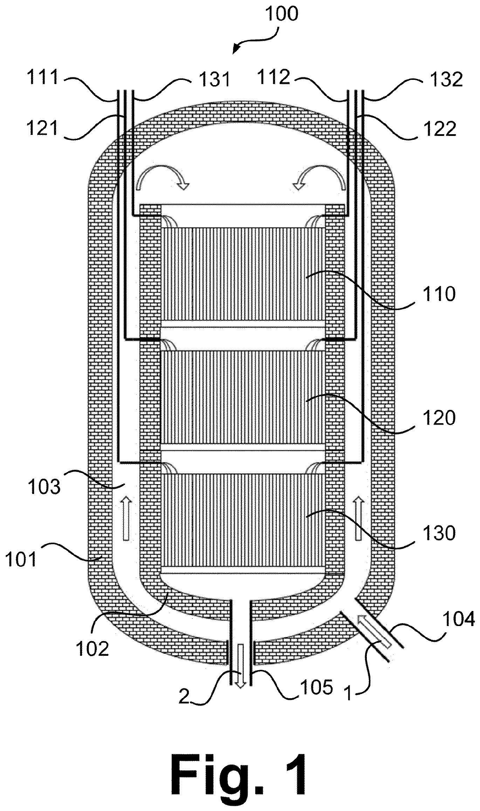

In Figur 1 ist ein Reaktor zum Einsatz in einem Verfahren gemäß einer hier vorgeschlagenen Ausgestaltung veranschaulicht und insgesamt mit 100 bezeichnet.

Der Reaktor 100 weist einen äußeren Reaktormantel 101 und einen inneren Reaktormantel 102 auf, die durch einen Zwischenraum 103 voneinander getrennt sind. Der äußere und innere Reaktormantel 101, 102 können aus geeigneten Materialien gebildet sein. Insbesondere kann eine Auskleidung aus einem Feuerfestmaterial vorgesehen sein, die von einem drucktragenden Stahlmantel umgeben ist.

Dem Reaktor 100, genauer dem Zwischenraum 103, kann über einen Einlassstutzen 104 ein Reaktionseinsatz 1, beispielsweise umfassend Dampf und Methan, zugeführt werden. Diese strömt in der durch Pfeile veranschaulichten Weise im dargestellten Beispiel von unten nach oben durch den Zwischenraum 103. Es heizt sich hierbei auf und tritt in einen Innenraum des inneren Reaktormantels 102 ein.

Die Reaktormäntel 101, 102 können aneinander befestigt und aus unterschiedlichen Teilen gebildet sein, wie erwähnt. Dies ist lediglich der Übersicht halber in Figur 1 nicht veranschaulicht. Auch von der Darstellung in Figur 1 abweichende Geometrien bzw. Anordnungen sind für einen entsprechenden Reaktor 100 jederzeit möglich. Insbesondere kann der in Figur 1 vertikal angeordnete Reaktor 100 auch horizontal angeordnet sein.

In dem inneren Reaktormantel sind im dargestellten Beispiel drei keramische Katalysatormodule 110, 120, 130 angeordnet, die nacheinander von oben nach unten von dem Reaktionseinsatz 1 durchströmt werden, bevor es über einen geeigneten Auslassstutzen 105 als Prozessgas 2 aus dem Reaktor 100 entnommen werden kann.

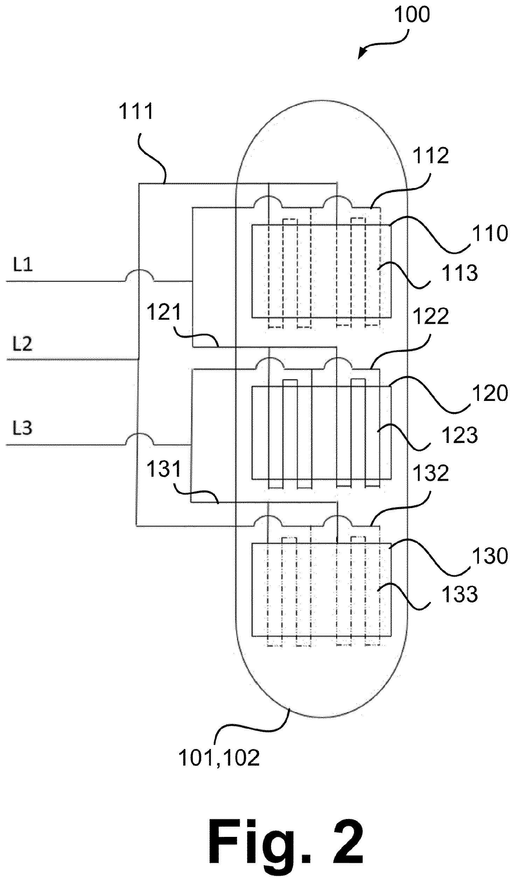

Zur Beheizung der Katalysatormodule 110, 120, 130 sind Leitungen 111, 112, 121, 122, 131, 132 für elektrischen Strom bereitgestellt, die, wie in Figur 2 genauer veranschaulicht, an resistive Heizelemente angebunden sind, die in dem hier diskutierten Beispiel drahtförmig ausgebildet sind und beispielsweise mäanderförmig durch die Katalysatormodule 110, 120, 130 verlaufen.

Durch die Führung der Leitungen 111, 112, 121, 122, 131, 132 durch den Zwischenraum 103 ist eine Kühlung derselben durch den diese umströmenden Reaktionseinsatz 1 möglich. Die Leitungen 111, 112, 121, 122, 131, 132 können, da eine absolute Dichtigkeit zwischen dem Zwischenraum 103 und dem Bereich der Katalysatormodule 110, 120, 130 nicht erforderlich ist, über geeignete Durchführungen durch den inneren Reaktorbehälter geführt werden, welche für eine Durchströmung mit dem Reaktionseinsatz eingerichtet sein können und ebenfalls eine aktive Kühlung der Leitungen 111, 112, 121, 122, 131, 132 ermöglichen. Die Anzahl der Leitungen 111, 112, 121, 122, 131, 132 ist nicht beschränkt und diese können in beliebiger Weise durch den inneren oder äußeren Reaktorbehälter 101, 102 geführt werden, beispielsweise seitlich nach oben.

Ebenfalls sind weitere Elemente, die optional vorhanden sein können, nicht dargestellt, beispielsweise Mischelemente in Form geeigneter geometrischer Strukturen an beliebiger Stelle in dem äußeren und/oder inneren Reaktorbehälter 101, 102, insbesondere aber zwischen den Katalysatormodulen 110, 120, 130, wodurch beispielsweise einheitliche Temperaturen über den gesamten Querschnitt der Katalysatormodule 110, 120, 130 sichergestellt werden können.

Weitere optionale Elemente können beispielsweise in Form von Gas- und/oder Flüssigkeitseinspeiseleitungen an beliebiger Stelle, beispielsweise zwischen den Katalysatormodulen 110, 120, 130 mündend, bereitgestellt sein, um eine nochmals verbesserte Kühlung des Reaktionseinsatzes 1 und/oder der Leitungen 111, 112, 121, 122, 131, 132 und/oder anderer Komponenten zu bewirken.

In Figur 2 ist eine elektrische Anbindung der Leitungen 111, 112, 121, 122, 131, 132 in einer Ausgestaltung des Reaktors 100 veranschaulicht.

Elektrischer Strom wird hierbei über einen ersten Außenleiter L1, einen zweiten Außenleiter L2 und einen dritten Außenleiter L3 bereitgestellt, die jeweils Wechselspannungen führen, wobei die Phasen der Wechselspannungen zueinander 120° phasenverschoben sind. Die jeweils durch die Katalysatormodule 110, 120, 130 geführten Widerstandsheizelemente, die hier jeweils mit einer gestrichelten Linie, einer durchgezogenen Linie und einer strichpunktierten Linie dargestellt und mit 113, 123 und 133 bezeichnet sind, sind in der veranschaulichten Weise über die Leitungen 111, 112, 121, 122, 131, 132 an die Außenleiter L1, L2, L3 angebunden.

Genauer sind die Widerstandsheizelemente 113, 123, 133 in Deltaverbindung verbunden, wobei bei jedem der Widerstandsheizelemente 113, 123, 133 ein erster Anschluss mit einem ersten der Außenleiter L1, L2, L3 und ein zweiter Anschluss mit einem zweiten, unterschiedlichen der Außenleiter L1, L2, L3 verbunden ist.

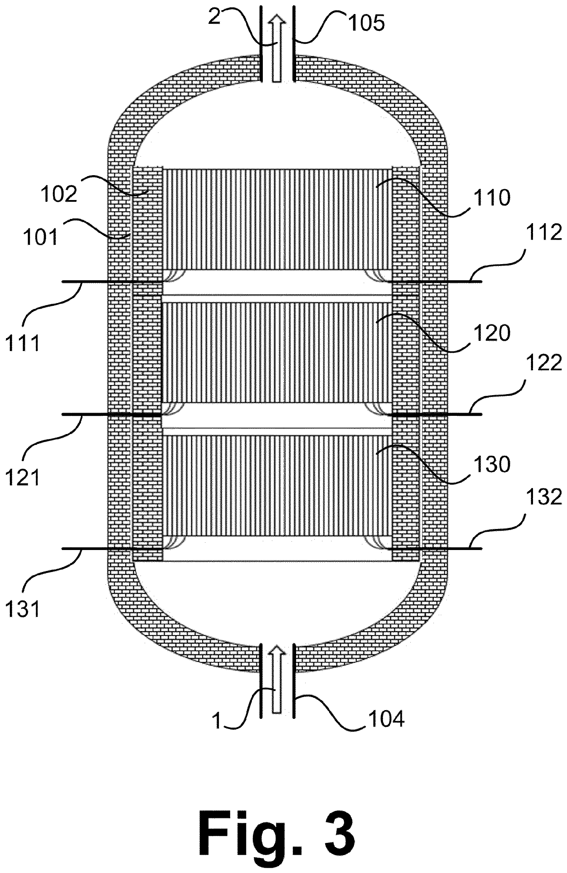

In Figur 3 ist ein Reaktor gemäß einer weiteren vorgeschlagenen Variante veranschaulicht, wobei die dargestellten Elemente bereits zuvor erläutert wurden. Im Unterschied zu Reaktor 100 gemäß Figur 1 ist dabei kein Zwischenraum 103 zwischen dem inneren und dem äußeren Reaktorbehälter vorhanden. Das Einsatzgas 1 tritt von unten in den Reaktor ein und wird diesem oben entnommen. Auch hier kann eine Anordnung abweichen und der Reaktor beispielsweise horizontal angeordnet sein.

## Patentansprüche

1. Verfahren zur Herstellung eines Verfahrensprodukts, das umfasst, einen Reaktionseinsatz (1) einem Reaktor (100) zuzuführen und in dem Reaktor (100) unter Bildung von elementarem Wasserstoff mit einem Katalysator in Kontakt zu bringen, wobei der Katalysator unter Verwendung von elektrischer Energie beheizt wird und in mehreren keramischen Katalysatormodulen (110, 120, 130) bereitgestellt ist, durch die jeweils Widerstandsheizelemente (113, 123, 133) geführt sind, wobei die Katalysatormodule (110, 120, 130) für eine serielle Durchströmung mit dem Reaktionseinsatz (1) eingerichtet sind.

2. Verfahren nach Anspruch 1, bei dem der Reaktionseinsatz einen oder mehrere Kohlenwasserstoffe und/oder Ammoniak als ein oder mehrere Edukte aufweist und der Katalysator eine Bildung von Wasserstoff aus dem einen oder den mehreren Edukten katalysiert.

3. Verfahren nach Anspruch 1 oder 2, bei dem die Bildung des elementaren Wasserstoffs eine Reformierreaktion umfasst und dem Reaktor (100) ein Gasgemisch bei einer Temperatur von 900 bis 1100 ° entnommen wird.

4. Verfahren nach einem der vorstehenden Ansprüche, bei dem die Katalysatormodule (110, 120, 130) austauschbar in dem Reaktor (100) bereitgestellt sind.

5. Verfahren nach einem der vorstehenden Ansprüche, bei dem die Widerstandsheizelemente (113, 123, 133) einzeln ansteuerbar sind.

6. Verfahren nach einem der vorstehenden Ansprüche, bei dem die Katalysatormodule (110, 120, 130) in einem inneren Reaktorbehälter (102) aufgenommen sind, der innerhalb eines äußeren Reaktorbehälters (101) angeordnet ist.

7. Verfahren nach Anspruch 6, bei dem der innere Reaktorbehälter (102) mit einem Zwischenraum (103) zu dem äußeren Reaktorbehälter (101) in dem äußeren Reaktorbehälter (101) angeordnet ist.

8. Verfahren nach Anspruch 7, bei dem ein erstes Ende des inneren Reaktorbehälters (102) gegenüber dem äußeren Reaktorbehälter (101) geöffnet und ein zweites Ende des inneren Reaktorbehälters (102) gegenüber dem äußeren Reaktorbehälter (101) abgeschlossen ist.

9. Verfahren nach Anspruch 7 oder 8, der dafür eingerichtet ist, den Reaktionseinsatz in einer ersten Hauptströmungsrichtung durch den Zwischenraum (103) und danach in einer nicht der ersten Hauptströmungsrichtung entsprechenden zweiten Hauptströmungsrichtung durch den inneren Reaktorbehälter (102) und die Katalysatormodule (110, 120, 130) zu führen.

10. Verfahren nach einem der vorstehenden Ansprüche, bei dem die Widerstandsheizelemente (113, 123, 133) jeweils an elektrische Leitungen (111, 112, 121, 122, 131, 132) angebunden sind

11. Verfahren nach Anspruch 10, wenn dieser von Anspruch 7 abhängt, bei dem die Leitungen (111, 112, 121, 122, 131, 132) teilweise oder vollständig durch den Zwischenraum (103) geführt sind.

12. Verfahren nach Anspruch 10 oder 11, bei dem die Leitungen (111, 112, 121, 122, 131, 132) in einer Anzahl von 2 × n bereitgestellt sind und an eine Anzahl von n Außenleiter (L1, L2, L3) angebunden sind.

13. Verfahren nach einem der Ansprüche 10 bis 12, bei dem die Widerstandsheizelemente (113, 123, 133) jeweils mit einem ersten Anschluss mit einem ersten der Außenleiter (L1, L2, L3) und mit einem zweiten Anschluss mit einem zweiten, unterschiedlichen der Außenleiter (L1, L2, L3) verbunden sind, wobei n insbesondere drei ist und die Widerstandsheizelemente (113, 123, 133) in Deltaverbindung verbunden sind.

14. Verfahren nach einem der vorstehenden Ansprüche, bei dem in den Reaktor (100) Gas- und/oder Flüssigkeitseinspeiseleitungen geführt sind, die in dem äußeren und/oder inneren Reaktorbehälter 101, 102 und/oder zwischen zumindest zwei der Katalysatormodule (110, 120, 130) münden, und/oder bei dem Gasverteilelemente in dem Reaktor (100) angeordnet sind.

15. Anlage zur Herstellung eines Verfahrensprodukts, mit einem Reaktor (100) und einem Katalysator sowie Mitteln, die dazu eingerichtet sind, dem Reaktor (100) einen Reaktionseinsatz (1) zuzuführen und in dem Reaktor (100) unter Bildung von Wasserstoff mit dem Katalysator in Kontakt zu bringen, wobei Mittel bereitgestellt sind, den Katalysator unter Verwendung von elektrischer Energie zu beheizen und wobei der Katalysator in mehreren keramischen Katalysatormodulen (110, 120, 130) bereitgestellt ist, durch die jeweils Widerstandsheizelemente (113, 123, 133) geführt sind, wobei die Katalysatormodule (110, 120, 130) für eine serielle Durchströmung mit dem Reaktionseinsatz (1) eingerichtet sind.
